# EUROPÄISCHE PATENTANMELDUNG

(11) **EP 4 184 350 A1**
(43) Veröffentlichungstag der Anmeldung: **24.05.2023**
(21) Anmeldenummer: 21209337.1
(22) Anmeldetag: 19.11.2021
(51) Int. Cl.: G06F 16/901, G06F 16/906

(54) **COMPUTER-IMPLEMENTIERTES VERFAHREN ZUM ERKENNEN EINES EINGABEMUSTERS IN MINDESTENS EINER ZEITREIHE EINER MEHRZAHL VON ZEITREIHEN**

(71) Anmelder: Siemens Aktiengesellschaft, 80333 München (DE); Siemens AG Österreich, 1210 Wien (AT)
(72) Erfinder: Fröhlich, Joachim, 85614 Kirchseeon (DE); Ionescu, Tudor, 1190 Wien (AT); Rothbauer, Stefan, 86156 Augsburg (DE)
(74) Vertreter: Siemens Patent Attorneys

(57) **Zusammenfassung**

Die Erfindung betrifft ein Computer-implementiertes Verfahren zum Erkennen eines Eingabemusters in mindestens einer Zeitreihe einer Mehrzahl von Zeitreihen; wobei das Eingabemuster ein Zeitreihenabschnitt einer bestimmten Länge ist; aufweisend die Schritte a. Bereitstellen der Mehrzahl der Zeitreihen; wobei jede Zeitreihe der Mehrzahl der Zeitreihen eine zeitlich geordnete Folge von Eingabedaten aufweist (S1); b.

Erzeugen einer Mehrzahl zugehöriger Zeitreihenabschnitte einer bestimmten Länge auf Basis der Mehrzahl der Zeitreihen mittels einer Kombination statistischer Ansätze oder eines Maschinellen Lernmodells (S2); wobei das Maschinelle Lernmodell mit Hilfe der Kombination der statistischen Ansätze zumindest auf einem Teil der Mehrzahl der Zeitreihen trainiert wurde; c. Indexieren jedes Zeitreihenabschnitts der Mehrzahl der Zeitreihenabschnitte (S3); d. Zuordnen jedes Zeitreihenabschnitts zu einem entsprechenden Schlüssel-Wert Index (S4); wobei der jeweilige Schlüssel-Wert Index einen numerischen Vektor, der den jeweiligen Zeitreihenabschnitt kennzeichnet als Schlüssel und die mindestens eine Position oder die mindestens eine Stelle in der jeweiligen Zeitreihe als Wert aufweist; e. Erkennen des Eingabemusters in mindestens einer Zeitreihe der Mehrzahl der Zeitreihen durch Identifizieren von mindestens einem Zeitreihenabschnitt, welcher mit dem Eingabemuster übereinstimmt oder diesem ähnlich ist, mittels eines Ähnlichkeitssuch-Ansatzes auf Basis der Mehrzahl der indexierten Zeitreihenabschnitte (S5); und f. Bereitstellen des mindestens einen identifizierten Zeitreihenabschnitts als Ausgabemuster, das mit dem Eingabemuster übereinstimmt oder diesem ähnlich ist, falls eine Übereinstimmung oder Ähnlichkeit erkannt wird (S6).
Ferner ist die Erfindung auf ein entsprechendes technisches System und Computerprogrammprodukt gerichtet. (Figur 1)

## Beschreibung

### 1. Technisches Gebiet

Die Erfindung betrifft ein computer-implementiertes Verfahren zum Erkennen eines Eingabemusters in mindestens einer Zeitreihe einer Mehrzahl von Zeitreihen. Ferner betrifft die Erfindung ein entsprechendes technisches System sowie Computerprogrammprodukt.

### 2. Stand der Technik

Die Muster- oder Ereigniserkennung im Hinblick auf technische Systeme gewinnt mit fortschreitender Digitalisierung zunehmend an Bedeutung. Durch die zuverlässige Muster- oder Ereigniserkennung, insbesondere Erkennung kritischer oder sicherheitskritischer Ereignisse, können Gefahren sowie Schäden zumindest verringert oder vollständig verhindert werden. Ferner können auch bereits eingetretene Schäden minimiert werden.

Beispielsweise gehen solche Gefahren oder Schäden von einer Interaktion zwischen Mensch und einem technischen System aus, wie ein technisches System im Bereich des maschinellen Lernens ("machine learning system"), einer Industrieanlage oder einer Robotereinheit. Die Anzahl der Interaktionen und deren Komplexität steigen mit der fortschreitenden Digitalisierung.

Herkömmlicherweise wird gemäß dem Stand der Technik bei der Muster- oder Ereigniserkennung nach einem Eingabemuster in Zeitreihen gesucht. Hierzu wird üblicherweise ein Eingabemusters mit jeder Zeitreihe aus einer Mehrzahl von Zeitreihen verglichen. Üblicherweise werden nicht nur exakte Übereinstimmungen, sondern auch ähnliche Übereinstimmungen gesucht. Nachteilig daran ist jedoch, dass diese Suche sehr komplex und rechenintensiv ist.

Meist erfolgt die Suche auch auf Basis von großen Datenmengen, folglich einer großen Anzahl von Zeitreihen. Dadurch erhöht sich die Komplexität und der Zeitaufwand weiterhin erheblich.

Die vorliegende Erfindung stellt sich daher die objektive technische Aufgabe ein computer-implementiertes Verfahren zum Erkennen eines Eingabemusters in mindestens einer Zeitreihe einer Mehrzahl von Zeitreihen bereitzustellen, welches zuverlässiger und effizienter ist.

### 3. Zusammenfassung der Erfindung

Die oben genannte Aufgabe wird erfindungsgemäß durch ein computer-implementiertes Verfahren zum Erkennen eines Eingabemusters in mindestens einer Zeitreihe einer Mehrzahl von Zeitreihen gelöst; wobei das Eingabemuster ein Zeitreihenabschnitt einer bestimmten Länge ist; aufweisend die Schritte:
a. Bereitstellen der Mehrzahl der Zeitreihen; wobei
   jede Zeitreihe der Mehrzahl der Zeitreihen eine zeitlich geordnete Folge von Eingabedaten aufweist;
b. Erzeugen einer Mehrzahl zugehöriger Zeitreihenabschnitte einer bestimmten Länge auf Basis der Mehrzahl der Zeitreihen mittels einer Kombination statistischer Ansätze oder eines Maschinellen Lernmodells; wobei
   das Maschinelle Lernmodell mit Hilfe der Kombination der statistischen Ansätze zumindest auf einem Teil der Mehrzahl der Zeitreihen trainiert wurde;
c. Indexieren jedes Zeitreihenabschnitts der Mehrzahl der Zeitreihenabschnitte;
d. Zuordnen jedes Zeitreihenabschnitts zu einem entsprechenden Schlüssel-Wert Index; wobei
   der jeweilige Schlüssel-Wert Index einen numerischen Vektor, der den jeweiligen Zeitreihenabschnitt kennzeichnet als Schlüssel und die mindestens eine Position oder die mindestens eine Stelle in der jeweiligen Zeitreihe als Wert aufweist;
e. Erkennen des Eingabemusters in mindestens einer Zeitreihe der Mehrzahl der Zeitreihen durch Identifizieren von mindestens einem Zeitreihenabschnitt, welcher mit dem Eingabemuster übereinstimmt oder diesem ähnlich ist, mittels eines Ähnlichkeitssuch-Ansatzes auf Basis der Mehrzahl der indexierten Zeitreihenabschnitte; und
f. Bereitstellen des mindestens einen identifizierten Zeitreihenabschnitts als Ausgabemuster, das mit dem Eingabemuster übereinstimmt oder diesem ähnlich ist, falls eine Übereinstimmung oder Ähnlichkeit erkannt wird.

Dementsprechend ist die Erfindung auf ein computer-implementiertes Verfahren zum Erkennen eines Eingabemusters in einer Mehrzahl von Zeitreihen gerichtet. Das Eingabemuster ist ein Zeitreihenabschnitt einer bestimmten Länge, folglich ein Abschnitt einer Zeitreihe.

Die Zeitreihenabschnitte können auch als Datenfenster bezeichnet werden. Ferner können die Zeitreihenabschnitte, wie Eingabemuster als numerische Vektoren ausgebildet sein.

Das Eingabemuster kann eine angemessene Länge aufweisen, beispielsweise lang genug, um das Eingabemuster darzustellen und gewünschte Eigenschaften zu erfassen. Ferner kann für die Länge des Eingabemusters eine ähnliche Größenordnung in Bezug auf die Länge der erzeugten Zeitreihenabschnitte aus den Zeitreihen, bevorzugt Fensterlänge, gewählt werden. Dementsprechend kann als Beispiel das Muster eine Länge von 80 - 150 bei einer Fensterlänge der erzeugten anderen Zeitreihenabschnitte von 100 haben.

In einem ersten Schritt werden die Zeitreihen bereitgestellt. Die Zeitreihen weisen Eingabedaten in einer zeitlichen Abfolge auf, beispielsweise Eingabedaten einer bestimmten physikalischen Größe. Die Eingabedaten können ferner als Messdaten oder als Systemzustandsdaten ausgebildet sein. Bei den Messdaten kann es sich um unterschiedliche Messdaten handeln, bevorzugt Messdaten eines technischen Systems, beispielsweise abhängig vom zugrundeliegenden technischen System oder von der Anwendung der Mustererkennung etc.

Das technische System kann als ein sicherheitskritisches System ("Safety Critical System", SCS) oder als Kritisches Infrastruktur System ausgebildet sein, welches eine oder mehrere Systemuntereinheiten oder Komponenten aufweisen kann. Beispielhafte SCSs sind autonome Fahrzeuge oder industrielle Anlagen etc. Beispielhafte Kritische Infrastruktur Systeme sind Niederspannungsnetze oder Energieliefersysteme (etwa Erdgaspipelines).

In einem zweiten Schritt werden aus den Zeitreihen Zeitreihenabschnitte erzeugt. Dabei kann ein Schiebefensterverfahren Anwendung finden. Mit anderen Worten kann ein Analysefenster über die Zeitreihen in eine Analysefenster-Schieberichtung geschoben werden. Unterschiedliche Parameter, wie Fensterlänge und Zeitschrittlänge etc. können dabei berücksichtigt werden. Auf diese erzeugten Zeitreihenabschnitte einer bestimmten Länge wird eine Kombination statistischer Ansätze (KSA) oder ein Maschinelles-Lern-Modell angewendet, welches mittels der KSA trainiert wurde, um die numerischen Vektoren für die Zeitreihenabschnitte zu erhalten.

Hinsichtlich der Kombination statistischer Ansätze, wird zunächst eine Mehrzahl von statistischen Ausgabewerten ermittelt, bevorzugt in Form eines numerischen Vektors. Die Ermittlung der Ausgabewerte erfolgt durch Verwendung einer Mehrzahl von unterschiedlichen statistischen Ansätzen, wie für Änderungspunkt-, Anomalie-, oder Strukturbrucherkennung in Zeitreihendaten oder Segmentierung von Zeitreihendaten, die auf statistischen Kenngrößen, Stichprobenfunktionen oder Modelle, wie etwa Varianz, Mittelwert, Autokorrelation, Autoregression oder Autoencoder etc. beruhen. Folglich unterscheiden sich die statistischen Ansätze inhärent voneinander, dabei sind sie jedoch funktionell redundant und dienen somit auch dem gleichen Zweck, der Ereigniserkennung. Die Mehrzahl der statistischen Ansätze wird als Kombination oder auch als Set bezeichnet, folglich Kombination statistischer Ansätze. Beispielsweise kann eine gleiche Funktion mit mehreren unterschiedlichen Parametern verwendet werden. Alternativ können unterschiedliche Funktionen, unterschiedlicher Quellcode einer Funktion, unterschiedliche Rechenverfahren oder unterschiedliche Algorithmen verwendet werden.

Dementsprechend resultieren die statistischen Ansätze jeweils in mindestens einen zugehörigen statistischen Ausgabewert. Der statistische Ausgabewert kann dabei als Bit (Binärziffer) ausgebildet sein. Ein Bit kann die Werte "0" oder "1" annehmen, wobei eine "1" darauf hinweist, dass ein bestimmter statistischer Ansatz aus der Kombination statistischer Ansätze ein Ereignis in dem betrachteten Zeitreihensegment detektiert hat.

Weiterhin kann die Mehrzahl der statistischen Ausgabewerte in mindestens ein statistisches Label überführt oder kombiniert werden. Das statistische Label kann als Bitfolge oder Binärcode ausgebildet sein. Das statistische Label kann auch als Ereignisklasse bezeichnet werden.

Das statistische Label kann beispielsweise den folgenden Binärcode aufweisen: 10011. Für jeden statistischen Ansatz wird ein Bit anzeigt, ob der zugeordnete statistische Ansatz ein Ereignis erkannt hat (1) oder nicht (0). Im Beispiel 10011 bilden 5 statistische Ansätze eine Kombination statistischer Ansätze, wobei 3 der 5 Ansätze ein Ereignis erkennen und 2 der 5 Ansätze kein Ereignis erkennen. Die Mehrheit der statistischen Ansätze erkennt somit ein Ereignis.

Das statistische Label kann mindestens einen Kausalfaktor für das mindestens ein Ereignis in Bezug auf das technische System kennzeichnen. Ferner kann das statistische Label mindestens eine Alarmstufe für das mindestens ein Ereignis in Bezug auf das technische System kennzeichnen.

Das Ereignis als solches kann sich auch auf Änderungspunkte, Anomalien oder andere sicherheitsrelevante Ereignisse in den Messdaten beziehen. Eine Mehrheitsregel oder ein Mehrheitsprinzip kann dabei zusätzliche Informationen über die Art des Ereignisses sowie der Zuverlässigkeit (englisch Confidence) der Aussage der Kombination statistischer Ansätze liefern.

Im Fall einer Ereignisklasse, kann die Mustererkennung auch Ereigniserkennung genannt werden. Mit anderen Worten kann mittels des beanspruchten Verfahrens ein Ereignis erkannt werden.

Diese zuvor genannten Schritte können auch als Ensemble-Vorhersage bezeichnet werden. Die Zuverlässigkeit wird durch die Ensemble-Vorhersage signifikant erhöht und die Menge an erkannten Ereignissen wird signifikant reduziert.

Alternativ zur Kombination statistischer Ansätze kann ein maschinelles Lernmodell ("trained supervised machine learning model") zur Erkennung eines oder mehrerer Ereignisse in Bezug auf ein technisches System verwendet werden, welches auf Zeitreihenabschnitten zur Ereigniserkennung trainiert wurde. Der Begriff "maschinelles Lernmodell" kann mit ML-Modell abgekürzt werden.

Dabei kann das Lernmodell als ein beliebiges Modell im Bereich des Maschinellen Lernens ("machine learning") ausgebildet sein, wie neuronale Netze, Random Forests, Support Vector Machines, etc. Ferner dient das Lernmodell der Ereigniserkennung. Das Ereignis steht in Bezug auf das technische System oder ist mit diesem assoziiert, einschließlich seiner Einheiten oder seiner Umgebung.

In weiteren Schritten werden die Zeitreihenabschnitte indexiert und es erfolgt ein Zuordnen jedes Zeitreihenabschnitts zu einem entsprechenden Schlüssel-Wert Index. Der Index ist dabei ein Schlüssel-Wert Index. Der Index weist einen numerischen Vektor, der den jeweiligen Zeitreihenabschnitt kennzeichnet als Schlüssel und die mindestens eine Position oder eine Stelle in der jeweiligen Zeitreihe als Wert auf. Die Position oder Stelle kann durch einen Zeitstempel oder Identifikator ausgebildet sein. Dabei entspricht der Schlüssel einem von einem KSA für den jeweiligen Zeitreihenabschnitt erzeugten statistischen Label, welches ein numerischer Vektor sein kann.

In einem weiteren Schritt wird das Eingabemuster in der Mehrzahl der Zeitreihen erkannt mithilfe einer oder mehrerer Suchen nach dem gleichen bzw. identischen Eingabemuster oder Mustern, die dem Eingabemuster ähnlich sind, in den indexierten Zeitreihenabschnitten. Die Suche kann in ein oder mehrere Ausgabemuster als Ausgabe resultieren.

Dabei können unterschiedliche Suchverfahren Anwendung finden. Beispielsweise können zunächst gleiche Eingabemuster erkannt und ausgegeben werden. Alternativ oder zusätzlich kann sich die Suche auf ähnliche Eingabemuster richten und ein oder mehrere ähnliche Ausgabemuster können ausgegeben werden.

Die unterschiedlichen Suchverfahren können gemäß einer Ausgestaltung auch nacheinander durchgeführt werden, zunächst eine Bereichssuche als erste Suche nach einem ersten Satz von Suchergebnissen und daran anschließend eine Punktsuche nach einem zweiten Satz von Suchergebnissen.

Das erfindungsgemäße Verfahren ermöglicht eine effiziente und zuverlässige Erkennung des Eingabemusters. Im Gegensatz zum Stand der Technik ist das Verfahren auf große Datenmengen von Zeitreihen anwendbar. Ferner wird der Zeitaufwand im Gegensatz zum Stand der Technik mittels der Indexierung der Zeitreihenabschnitte erheblich reduziert. Die Suche nach dem Eingabemuster auf Basis der indexierten Zeitreihenabschnitte kann flexibel in Abhängigkeit von den Nutzerbedürfnissen, den Anwendungen, den Eingabedaten und dem zugrundeliegenden technischen System gewählt werden.

In einer Ausgestaltung wird das Eingabemuster durch einen Nutzer über eine Eingabeschnittstelle eingegeben, bevorzugt mittels einer manuellen Eingabe oder einer Spracheingabe. Dementsprechend wird das Eingabemuster von dem Nutzer über eine Eingabeschnittstelle wie Eingabemaske eingegeben. Der Nutzer kann das Eingabemuster in der Eingabemaske als Text in digitaler Form eingeben oder mittels eines Sprachbefehls. Alternativ kann das Eingabemuster über ein oder mehrere andere Schnittstellen ohne Nutzerinteraktion empfangen werden, wie etwa die manuelle Auswahl eines Bereiches (Zeitreihenabschnittes) in einer Zeitreihe, der anschließend als Eingabemuster bezeichnet wird. Das Muster kann in einer Datei manuell eingegeben werden, über eine Auswahl aus einer größeren Zeitreihe, über copy/paste oder über eine Grafik eingegeben werden.

In einer weiteren Ausgestaltung ist die Mehrzahl der Zeitreihen und/oder die Mehrzahl der zugehörigen Zeitreihenabschnitte in einer Datenbank oder Cloud gespeichert. Dementsprechend sind die Zeitreihen und/oder deren Abschnitte in einem flüchtigen oder nicht-flüchtigen Speichermedium abgelegt. Die Datenbank und die Cloud haben sich hinsichtlich einer effizienten und zuverlässigen Datenspeicherung sowie Datenzugriff als vorteilhaft erwiesen.

In einer weiteren Ausgestaltung werden die Eingabedaten durch eine Datenerfassungseinheit erfasst, bevorzugt einer Sensoreinheit, einer Kameraeinheit oder einer Bilderkennungseinheit. Dementsprechend werden die Eingabedaten effizient und zuverlässig durch eine Datenerfassungseinheit erfasst. Die Datenerfassungseinheit kann abhängig von der konkreten Anwendung, den Eingabedaten und/oder dem zugrundeliegenden technischen System flexibel ausgewählt werden. Für unterschiedliche Eingabedaten können vorteilhafterweise auch unterschiedliche Datenerfassungseinheiten gewählt werden.

In einer weiteren Ausgestaltung wird die Mehrzahl der Zeitreihen über eine oder mehrere Schnittstellen bereitgestellt. Dementsprechend werden die Zeitreihen als Eingabedaten durch eine oder mehrere Eingabeschnittstellen auf effiziente Weise empfangen.

In einer weiteren Ausgestaltung werden die indexierten Zeitreihenabschnitte in einer Datenbank oder Cloud gespeichert. Dementsprechend können für die Zeitreihen, nicht indexiert, und für die indexierten Zeitreihen unterschiedliche bzw. getrennte Speichermedien vorgesehen sein. Die indexierten Daten werden in einem Index-Speichermedium, wie Datenbank oder Cloud abgelegt. Alternativ zur Trennung der Daten in getrennte separate Speichermedien kann auch ein gemeinsames Speichermedium für die gesamten Zeitreihen, nicht indexiert und indexiert, verwendet werden. Die Index-Datenbank kann vorteilhafterweise für unterschiedliche Anwendungen, einschließlich der Suche nach dem Eingabemuster unabhängig verwendet werden.

In einer weiteren Ausgestaltung ist der numerische Vektor ein statistisches Label, bevorzugt ein kardinal statistisches Label.

In einer weiteren Ausgestaltung ist der Ähnlichkeitssuch-Ansatz ein Suchverfahren für eine Suche nach Mustern basierend auf Ähnlichkeit, bevorzugt basiert der Ansatz auf einer dynamischen Zeitnormierung (Dynamic Time Warp, DTW).

In einer weiteren Ausgestaltung weist das Verfahren weiterhin den Schritt Durchführen mindestens einer Maßnahme auf Basis des mindestens einen identifizierten Zeitreihenabschnitts als Ausgabemuster auf, wobei die Maßnahme eine Maßnahme ist, ausgewählt aus der Gruppe bestehend aus:
- Anzeigen des Ausgabemusters auf einer Anzeigeeinheit, wobei das Ausgabemuster bevorzugt einem Nutzer angezeigt werden;
- Analysieren oder Bearbeiten des Ausgabemusters durch den Nutzer;
- Selektieren oder Filtern des Ausgabemusters aus einer Mehrzahl der identifizierten Zeitreihenabschnitte, bevorzugt unter Berücksichtigung der vorhergehenden Analyse oder Bearbeitung durch den Nutzer;
- Übertragen des mindestens einen Ausgabemusters an eine Recheneinheit für eine weitere Analyse, weitere Bearbeitung, weitere Selektion oder weitere Filterung durch die Recheneinheit;
- Speichern des Ausgabemusters in einer Speichereinheit, wobei die Speichereinheit ein flüchtiges oder nicht-flüchtiges Speichermedium ist;
- Analysieren oder Bearbeiten des Ausgabemusters;
- Selektieren oder Filtern des Ausgabemusters aus einer Mehrzahl der identifizierten Zeitreihenabschnitte;
- Einleiten einer Gegenmaßnahme in Abhängigkeit von der Analyse, der Bearbeitung, der Selektion oder der Filterung; und
- Bereitstellen einer Fehlermeldung, falls keine Übereinstimmung oder keine Ähnlichkeit erkannt wird.

Dementsprechend wird nach der Eingabemustererkennung eine anschließende Maßnahme durchgeführt. Beispielsweise ist das erkannte Eingabemuster und/oder auch das mindestens eine zugehörige Ausgabemuster sicherheitsrelevant, sicherheits- oder infrastruktur-kritisch, beispielsweise im Hinblick auf ein SCS.

Eine oder mehrere Maßnahmen können nach der Eingabemustererkennung eingeleitet werden. Die Maßnahmen können gleichzeitig, nacheinander oder auch stufenweise durchgeführt werden. Dadurch werden die Maßnahmen vorteilhafterweise zeitnah sowie effizient ergriffen.

Zunächst kann in einem ersten Schritt das mindestens eine Ausgabemuster dem Nutzer einfach angezeigt werden. Der Nutzer kann basierend auf dem Ausgabemuster eine weitere Analyse anstoßen, beispielsweise falls der Nutzer das Ausgabemuster für sicherheitsrelevant erachtet. Das Ausgabemuster kann ein statistisches Label in Form einer Ereignisklasse sein, das mindestens einen Kausalfaktor oder eine Alarmstufe für mindestens ein Ereignis in Bezug auf das technische System kennzeichnet. Somit ist das Ausgabemuster sicherheitsrelevant. Alternativ zur weiteren Analyse oder nach weitergehender Analyse kann der Nutzer Gegenmaßnahmen einleiten, um eine Gefahr abzuwenden. Die Analyse kann für den Nutzer hilfreich sein, um zu entscheiden, ob eine oder mehrere Gegenmaßnahmen erforderlich sind und eingeleitet werden müssen. Ferner kann die Analyse ergeben, dass das Ereignis eine Auswirkung auf Mensch und/oder Maschine, wie technisches System oder Steuerung, hat. Die Auswirkung kann beispielsweise eine Fehlsteuerung des technischen Systems oder einer Einheit sein und die Sicherheit von Mensch und/oder Maschine gefährden. In diesem Fall kann eine Gegenmaßnahme zuverlässig und effizient eingeleitet werden, um die Gefahr zu beseitigen.

Die Auswirkung kann auch eine Fehlsteuerung eines technischen Systems im Rahmen eines Stromversorgungsnetzes sein, die die Stromversorgung gefährden kann.

Die Gegenmaßnahme kann die Abschaltung der Maschine betreffen oder auch die Durchführung weiterer Analyseschritte erfordern etc. Somit wird ein Mensch- und/oder ein Maschinen-Schaden zuverlässig verhindert.

Alternativ zur Nutzerinteraktion, können die aufgelisteten und beanspruchten Maßnahmen auch automatisch durch das computer-implementierte Verfahren durchgeführt werden oder das mindestens eine Ausgabemuster wird an eine andere Recheneinheit übermittelt.

Die Erfindung betrifft ferner ein technisches System. Dementsprechend wird das erfindungsgemäße Verfahren durch ein technisches System durchgeführt. Das technische System kann ein oder mehrere Untereinheiten wie Recheneinheiten aufweisen. Beispielsweise können ein Verfahrensschritt oder mehrere auf einer Recheneinheit durchgeführt werden. Andere Verfahrensschritte können auf der gleichen oder einer anderen Recheneinheit durchgeführt werden. Zusätzlich kann das technische System auch Speichereinheiten etc. aufweisen.

Die Erfindung betrifft ferner ein Computerprogrammprodukt mit einem Computerprogramm, das Mittel zur Durchführung des oben beschriebenen Verfahrens, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
- FIG 1: zeigt ein Ablaufdiagramm des erfindungsgemäßen Verfahrens.
- FIG 2: zeigt ein kardinales statistisches Label gemäß einer Ausführungsform der Erfindung.

### 5. Beschreibung der bevorzugten Ausführungsformen

Im Folgenden werden bevorzugte Ausführungsformen der vorliegenden Erfindung in Bezug auf die Figuren beschrieben.

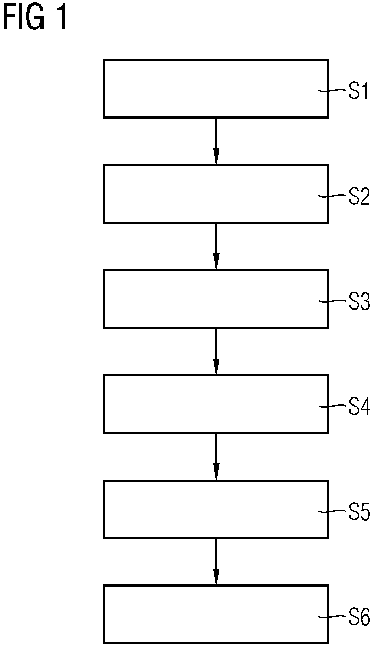

Figur 1 stellt ein Ablaufdiagramm des erfindungsgemäßen Verfahrens mit den Verfahrensschritten S1 bis S6 schematisch dar.

Indexieren der Mehrzahl der Zeitreihen S1 bis S3

Die Mehrzahl der Zeitreihen wird indexiert, wobei die Zeitreihen in einer Zeitreihendatenbank gespeichert sein können und in einem ersten Schritt für die Indexierung bereitgestellt werden S1. Alternativ zur Datenbank kann eine andere Speichereinheit eingesetzt werden, wie Cloud.

Hierzu werden zunächst aus den Zeitreihen Zeitreihenabschnitte erzeugt S2, durch Anwenden der Kombination statistischer Ansätze oder des Maschinellen Lernmodells auf die bereitgestellten Zeitreihen. Die erzeugten Zeitreihenabschnitte werden indexiert S3. Anschließend erfolgt die Zuordnung der Schlüssel-Wert Indexe S4.

Der jeweilige Schlüssel-Wert Index ist als numerischer Vektor ausgebildet, der den jeweiligen Zeitreihenabschnitt als Schlüssel kennzeichnet und die mindestens eine Position oder eine Stelle in der jeweiligen Zeitreihe als Wert aufweist.

Im Folgenden sind beispielhafte Schlüssel-Wert Indexe aufgelistet.

Beispiel 1:
0110101: 22, 34, 66

Der Schlüssel ist 0110101 und dementsprechend ein Binärcode. Für jeden statistischen Ansatz der Kombination statistischer Ansätze wird ein Bit anzeigt, ob der zugeordnete statistische Ansatz ein Ereignis erkannt hat (1) oder nicht (0).

Im Beispiel 0110101 bilden 7 statistische Ansätze eine Kombination statistischer Ansätze, wobei 4 der 7 Ansätze ein Ereignis erkennen und 3 der 7 Ansätze kein Ereignis erkennen. Die Mehrheit der statistischen Ansätze erkennt somit ein Ereignis.

Der Wert ist 22, 34, 66 und ist die Position oder Stelle des jeweiligen Zeitreihenabschnitts in den Zeitreihen.

Beispiel 2:
1001110: 127, 883, 90

Der Schlüssel ist 1001110 und dementsprechend ein Binärcode. Im Beispiel 1001110 bilden 7 statistische Ansätze eine Kombination statistischer Ansätze, wobei 4 der 7 Ansätze ein Ereignis erkennen und 3 der 7 Ansätze kein Ereignis erkennen. Die Mehrheit der statistischen Ansätze erkennt somit ein Ereignis.

Der Wert ist 127, 883, 90 und ist die Position oder Stelle des jeweiligen Zeitreihenabschnitts in den Zeitreihen.

Suche in den indexierten Zeitreihenabschnitten nach dem Eingabemuster S5, S6

Die Indexierung ermöglicht es auf den indexierten Zeitreihenabschnitten eine effiziente Suche nach dem Eingabemuster durchzuführen.

Gemäß einer Ausführungsform kann zunächst eine Bereichssuche (Vorabsuche) zur Erzeugung eines ersten Satzes an Suchergebnissen durchgeführt werden. Mit anderen Worten wird bei der Bereichssuche nach dem Eingabemuster in Form des numerischen Vektors, bevorzugt nach dem statistischen Label gesucht.

Auf diesem ersten Satz an Suchergebnissen kann darauf aufbauend eine zweite Suche mittels eines genaueren oder spezifischeren Verfahrens, bevorzugt DTW, durchgeführt werden, um einen zweiten Satz an Suchergebnissen zu erzeugen. Die zweite Suche schränkt die Suchergebnisse aus der ersten Suche mit anderen Worten weiter ein. Die zweite Suche kann auch als Punktsuche bezeichnet werden.

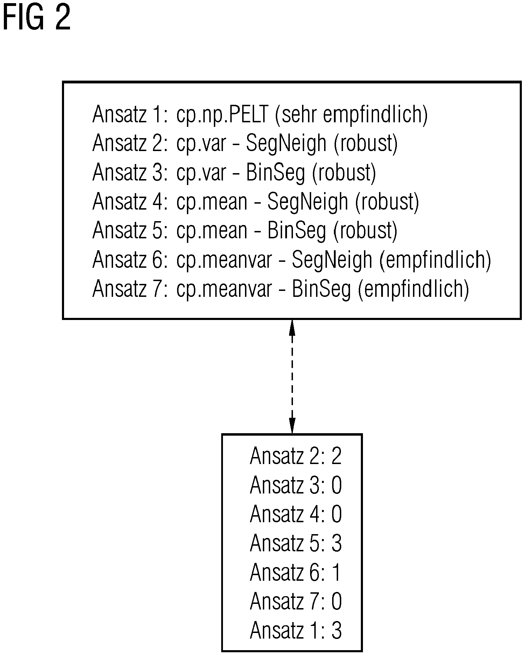

Gemäß einer Ausführungsform der Erfindung kann der Indexschlüssel in Form des statistischen Labels zu einem kardinalen statistischen Label erweitert werden, welches in Figur 2 dargestellt ist. Das kardinal statistische Label erfasst, wie häufig der jeweilige statische Ansatz der Kombination statistischer Ansätze Änderungen im betreffenden Zeitraum erkannt hat.

Das kardinale statistische Label wird als zweiter Schlüssel berechnet und im Schlüssel-Wert Index festgehalten. Die Vorabsuche kann in diesem Fall in zwei Schritte geteilt werden, wie folgt:
Zunächst wird in einem ersten Schritt nach dem statistischen Label gesucht (Schlüssel 1, binäres statistisches Label). Danach wird in einem zweiten Schritt nach dem kardinalen statistischen Label gesucht (Schlüssel 2, kardinales statistisches Label). Mit anderen Worten erfolgt eine Einschränkung im zweiten Schritt, wobei die Einschränkung durch eine Metrik auf das kardinale statistische Label erfolgt.

Dabei werden alle gemäß einer Ausführungsform Ergebnisse zurückgeliefert, bei denen die Distanz zu dem durch die Suche vorgegebenen kardinalen statistischen Label eine gewisse Größe nicht überschreitet.

Beispiel:
Kardinales statistisches Label 1 (abgekürzt mit KSA 1) = 2 1 2 0 0 2
Kardinales statistisches Label 2 (abgekürzt mit KSA 2)= 1 1 3 0 0 1
Distanz (KSL1, KSL2) = |2-1| + |1-1| + |2-3| + |0-0| + |0-0| + |2-1| = 3

## Patentansprüche

1. Computer-implementiertes Verfahren zum Erkennen eines Eingabemusters in mindestens einer Zeitreihe einer Mehrzahl von Zeitreihen; wobei
das Eingabemuster ein Zeitreihenabschnitt einer bestimmten Länge ist; aufweisend die Schritte
a. Bereitstellen der Mehrzahl der Zeitreihen; wobei
jede Zeitreihe der Mehrzahl der Zeitreihen eine zeitlich geordnete Folge von Eingabedaten aufweist (S1) ;
b. Erzeugen einer Mehrzahl zugehöriger Zeitreihenabschnitte einer bestimmten Länge auf Basis der Mehrzahl der Zeitreihen mittels einer Kombination statistischer Ansätze oder eines Maschinellen Lernmodells (S2); wobei
das Maschinelle Lernmodell mit Hilfe der Kombination der statistischen Ansätze zumindest auf einem Teil der Mehrzahl der Zeitreihen trainiert wurde;
c. Indexieren jedes Zeitreihenabschnitts der Mehrzahl der Zeitreihenabschnitte (S3);
d. Zuordnen jedes Zeitreihenabschnitts zu einem entsprechenden Schlüssel-Wert Index (S4); wobei
der jeweilige Schlüssel-Wert Index einen numerischen Vektor, der den jeweiligen Zeitreihenabschnitt kennzeichnet als Schlüssel und die mindestens eine Position oder die mindestens eine Stelle in der jeweiligen Zeitreihe als Wert aufweist;
e. Erkennen des Eingabemusters in mindestens einer Zeitreihe der Mehrzahl der Zeitreihen durch Identifizieren von mindestens einem Zeitreihenabschnitt, welcher mit dem Eingabemuster übereinstimmt oder diesem ähnlich ist, mittels eines Ähnlichkeitssuch-Ansatzes auf Basis der Mehrzahl der indexierten Zeitreihenabschnitte (S5); und
f. Bereitstellen des mindestens einen identifizierten Zeitreihenabschnitts als Ausgabemuster, das mit dem Eingabemuster übereinstimmt oder diesem ähnlich ist, falls eine Übereinstimmung oder Ähnlichkeit erkannt wird (S6).

2. Computer-implementiertes Verfahren nach Anspruch 1, wobei das Eingabemuster durch einen Nutzer über eine Eingabeschnittstelle eingegeben wird, bevorzugt mittels einer manuellen Eingabe oder einer Spracheingabe.

3. Computer-implementiertes Verfahren nach Anspruch 1 und Anspruch 2, wobei die Mehrzahl der Zeitreihen und/oder die Mehrzahl der zugehörigen Zeitreihenabschnitte in einer Datenbank oder Cloud gespeichert ist.

4. Computer-implementiertes Verfahren nach einem der vorhergehenden Ansprüche, wobei die Eingabedaten durch eine Datenerfassungseinheit erfasst werden, bevorzugt einer Sensoreinheit, einer Kameraeinheit oder einer Bilderkennungseinheit.

5. Computer-implementiertes Verfahren nach einem der vorhergehenden Ansprüche, wobei die Mehrzahl der Zeitreihen über eine oder mehrere Schnittstellen bereitgestellt werden.

6. Computer-implementiertes Verfahren nach einem der vorhergehenden Ansprüche, wobei die indexierten Zeitreihenabschnitte in einer Datenbank oder Cloud gespeichert werden.

7. Computer-implementiertes Verfahren nach einem der vorhergehenden Ansprüche, wobei der numerische Vektor ein statistisches Label, bevorzugt ein kardinal statistisches Label ist.

8. Computer-implementiertes Verfahren nach einem der vorhergehenden Ansprüche, wobei der Ähnlichkeitssuch-Ansatz ein Suchverfahren für eine Suche nach Mustern basierend auf Ähnlichkeit ist, bevorzugt basiert der Ansatz auf einer dynamischen Zeitnormierung (Dynamic Time Warp, DTW) .

9. Computer-implementiertes Verfahren nach einem der vorhergehenden Ansprüche, weiterhin aufweisend den Schritt Durchführen mindestens einer Maßnahme auf Basis des mindestens einen identifizierten Zeitreihenabschnitts als Ausgabemuster, wobei die mindestens eine Maßnahme eine Maßnahme ist, ausgewählt aus der Gruppe bestehend aus:
- Anzeigen des Ausgabemusters auf einer Anzeigeeinheit, wobei das Ausgabemuster bevorzugt einem Nutzer angezeigt werden;
- Analysieren oder Bearbeiten des Ausgabemusters durch den Nutzer;
- Selektieren oder Filtern des Ausgabemusters aus einer Mehrzahl der identifizierten Zeitreihenabschnitte, bevorzugt unter Berücksichtigung der vorhergehenden Analyse oder Bearbeitung durch den Nutzer;
- Übertragen des mindestens einen Ausgabemusters an eine Recheneinheit für eine weitere Analyse, weitere Bearbeitung, weitere Selektion oder weitere Filterung durch die Recheneinheit;
- Speichern des Ausgabemusters in einer Speichereinheit, wobei die Speichereinheit ein flüchtiges oder nicht-flüchtiges Speichermedium ist;
- Analysieren oder Bearbeiten des Ausgabemusters;
- Selektieren oder Filtern des Ausgabemusters aus einer Mehrzahl der identifizierten Zeitreihenabschnitte;
- Einleiten einer Gegenmaßnahme in Abhängigkeit von der Analyse, der Bearbeitung, der Selektion oder der Filterung; und
- Bereitstellen einer Fehlermeldung, falls keine Übereinstimmung oder keine Ähnlichkeit erkannt wird.

10. Technisches System zum Durchführen des computerimplementierten Verfahrens nach einem der vorhergehenden Ansprüche.

11. Computerprogrammprodukt mit einem Computerprogramm, das Mittel zur Durchführung des Verfahrens nach einem der Ansprüche 1 bis 9 aufweist, wenn das Computerprogramm auf einer programmgesteuerten Einrichtung zur Ausführung gebracht wird.
